# EUROPÄISCHE PATENTSCHRIFT

(11) **EP 0 505 600 B1**
(45) Veröffentlichungstag und Bekanntmachung des Hinweises auf die Patenterteilung: **15.02.1995**
(21) Anmeldenummer: 91105053.2
(22) Anmeldetag: 28.03.1991
(51) Int. Cl.: A61C 17/06, F16K 31/40

(54) **Ventilanordnung**
Valve arrangement
Soupape

(43) Veröffentlichungstag der Anmeldung: 30.09.1992
(73) Patentinhaber: SIEMENS AKTIENGESELLSCHAFT, 80333 München (DE)
(72) Erfinder: Sutter, Ralf, Dipl.-Ing., W-6800 Mannheim (DE); Beerstecher, Lutz, Dipl.-Ing., W-6140 Bensheim 3 (DE)

(56) Entgegenhaltungen:
- EP-A- 0 355 467
- DE-B- 2 037 197
- FR-A- 2 035 488

## Beschreibung

Die Erfindung betrifft eine Ventilanordnung zur Steuerung des Durchflusses eines Luftstromes in einer Luftströmungsanlage, vorzugsweise zur Steuerung des Saugstromes in einer zahnärztlichen Absauganlage, mit einem den Durchfluß bestimmenden Ventil, welches ein Verschlußorgan enthält, das einerseits einen Ventilraum und andererseits einen Steuerraum begrenzt und das durch Druckänderungen im Steuerraum aus einer offenen Stellung bei gleichen Drücken in Ventil- und Steuerraum in eine Schließstellung bei höherem Druck im Steuerraum bringbar ist.

Eine derartige Ventilanordnung ist aus der EP-A-0 355 467 (DE-A-3 827 176) oder der DE-A-2 005 567 (FR-A-2 035 488) bekannt.

Solche Ventilanordnungen werden in zahnmedizinischen Geräten zur Steuerung des Saugluftstromes bei Absauganlagen zum Absaugen von Wasser, Blut, Speichel, Zahnsubstanz, usw. aus der Mundhöhle eines Patienten eingesetzt. Bei der aus der DE-A-2 005 567 bekannten Ventilanordnung ist das den Durchfluß des Luftstromes bestimmende Ventil in der Saugleitung eines Unterdruckerzeugers angeordnet. Das Ventil enthält als Verschlußorgan eine Membran, die das Ventilgehäuse in einen oberen Steuerraum, der von einem Deckel abgedeckt wird und einen unteren Raum, den eigentlichen Ventilraum, der den Ein- und Auslaßkanal für das Medium enthält, unterteilt. Der Steuerraum steht über eine Verbindungsleitung mit dem Auslaßkanal in Verbindung. In die Verbindungsleitung ist ein durch Unterdruck steuerbares Entlüftungsventil geschaltet, welches bei Aktivierung den Steuerraum mit der Atmosphäre verbindet. Mit Hilfe dieses, als Steuerventil wirkenden Entlüftungsventils kann der Durchflußquerschnitt im Ventilraum ganz geöffnet oder geschlossen oder auch nur teilweise geöffnet werden.

Alternativ zu dem vorgenannten Entlüftungsventil ist bei diesem Stand der Technik auch eine Ventilanordnung beschrieben, bei der von der Verbindungsleitung zwischen dem Ventilraum und dem Steuerraum eine Leitung abzweigt, deren freies Ende an sich ständig mit der Atmosphäre verbunden ist und bei Bedarf vom Bediener zur Steuerung geschlossen werden kann. Zur Erzielung einer Dosierung des Saugstromes wird vorgeschlagen, in diese Steuerleitung eine Drossel einzubauen, die der Benutzer entsprechend betätigt. Mit dieser Drossel kann die Druckdifferenz auf beiden Seiten der Membran beeinflußt und so der Durchfluß des Mediums gesteuert werden.

Bei einer anderen, ähnlich aufgebauten Ventilanordnung nach der EP-A-0 355 467 (DE-A-3 827 176) wird der obere Steuerraum des Ventils intermittierend mit der Atmosphäre verbunden, indem entweder ein elektromagnetisch betätigbares Vorsteuerventil oder ein die Membran direkt beeinflussendes Belüftungsventil mit einer wählbaren Taktfrequenz ein- und ausgeschaltet wird. Eine solche intermittierende Ansteuerung führt zwangsläufig zu einer höheren mechanischen Belastung der Steuerorgane.

Ausgehend von diesem Stand der Technik liegt der im Anspruch 1 angegebenen Erfindung die Aufgabe zugrunde, eine Lösung anzugeben, die es ermöglicht, den Luftstrom, insbesondere den Saugstrom bzw. die Saugstärke unterschiedlich abgestuft einstellen zu können, und zwar in einer vom Benutzer wählbaren Abstufung. Es soll dabei eine Möglichlichkeit geschaffen werden, bei der die Umsetzung der Steuersignale zur Erzielung der gewünschten Abstufung verschleißarmer und bezüglich der elektrischen Ansteuerung leichter realisierbar ist. Ein weiteres Ziel ist es, mit möglichst wenigen elektrischen Signalen eine Vielzahl von Saugstärkestufen einstellen zu können.

Diese Aufgabe wird durch die in Anspruch 1 angegebene Ventilanordnung gelöst.

Ein wesentlicher Vorteil der Erfindung ist darin zu sehen, daß die Einstellung der Saugstärke individuell den jeweiligen Erfordernissen angepaßt werden kann. So ist es möglich, durch Wahl der Querschnitte, mit denen im Steuerraum eine Druckerhöhung erzielt wird, unterschiedliche Ventilkennlinien vorzusehen. Die Anzahl der möglichen Einstellungen der Saugstärke ist dabei von der Anzahl der vorgesehenen Steuerventile abhängig. Wie aus der nachfolgenden Beschreibung eines Ausführungsbeispieles hervorgeht, ergeben sich bereits bei vier Steuerventilen sechzehn mögliche Saugstärkeeinstellungen.

Weitere Vorteile ergeben sich aus der nachstehenden Beschreibung eines Ausführungsbeispieles der Erfindung.
Es zeigen:
Figur 1 eine vereinfachte Darstellung eines elektro-pneumatischen Schaltplanes für eine zahnärztliche Absauganlage in Verbindung mit der erfindungsgemäßen Ventilanordnung,
Figur 2 die erfindungsgemäße Ventilanordnung im Schnitt, entsprechend der Linie II/II in Figur 3,
Figur 3 die Ventilanordnung nach Figur 2 in einer Draufsicht,
Figur 4 eine erste Ventilkennlinie mit quadratischer Düsenflächenauslegung bei vier Steuerventilen,
Figur 5 eine graphische Darstellung der Steuerung der Durchflußmenge in Abhängigkeit von der Saugstärkeeinstellung bei einer Auslegung der Steuerventile nach Figur 4,
Figur 6 eine weitere Ventilkennlinie mit Darstellung des Volumenstromes als Funktion der Saugstärkeeinstellung.

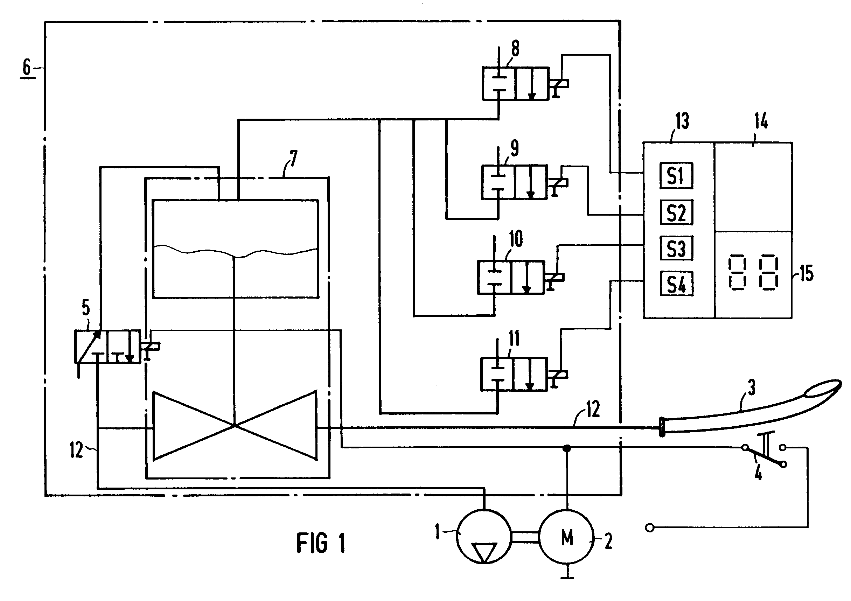

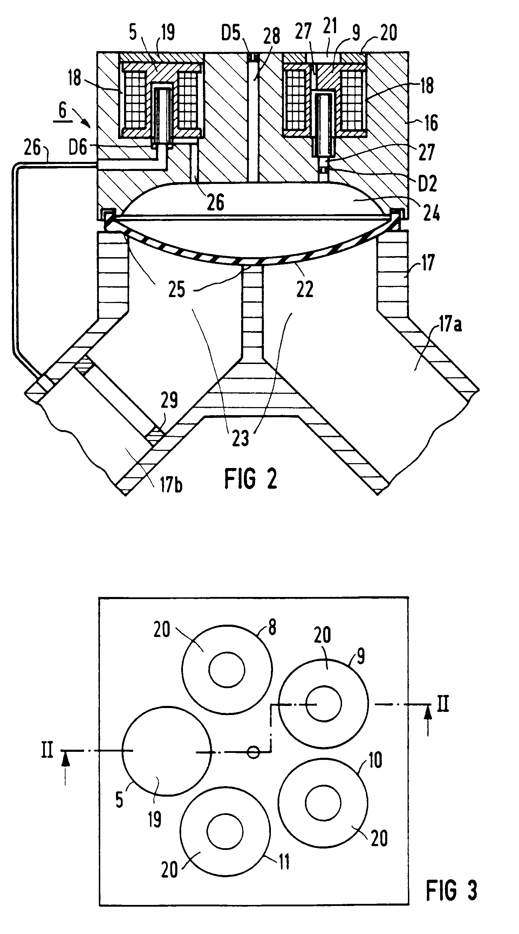

In der Figur 1, die in einer vereinfachten Darstellung den elektro-pneumatischen Schaltplan einer zahnärztlichen Absauganlage in Verbindung mit der erfindungsgemäßen Ventilanordnung zeigt, ist mit 1 ein Unterdruckerzeuger bezeichnet, der von einem Elektromotor 2 angetrieben wird und an einem Handstück 3 in bekannter Weise einen zum Absaugen von Sekreten und dergleichen geeigneten Saugstrom (Unterdruck) erzeugt. Der Unterdruckerzeuger 1 bzw. dessen Elektromotor 2 kann separat oder mittels eines in Abhängigkeit von der Entnahme des Saughandstückes aus einer Ablage ansprechenden Schalters 4 ein- und ausgeschaltet werden. Mit der Betätigung des Schalters 4 wird ein Elektromagnet-Schaltventil 5 geschaltet, welches Teil einer allgemein mit 6 bezeichneten Ventilanordnung ist. Die Ventilanordnung 6 enthält außer dem bereits erwähnten Schaltventil 5 ein den Durchfluß des Luftstromes zwischen Unterdruckerzeuger 1 und Saughandstück 3 steuerndes Ventil 7 sowie vier Steuerventile 8 bis 11. Das den Durchfluß des Mediums steuernde Ventil 7, welches in Figur 2 im Längsschnitt näher dargestellt ist, ist in die Saugleitung 12 zwischen Saughandstück 3 und Unterdruckerzeuger 1 geschaltet. Weitere, in die Saugleitung 12 üblicherweise vorzusehende Maßnahmen zur Abscheidung der abgesaugten Partikel sowie der Flüssigkeit sind, da sie für die Erfindung nicht wesentlich sind, im Schaltplan nicht eingetragen.

Die vier Steuerventile 8 bis 11 werden von einem extern der Ventilanordnung angeordneten Bedienpaneel 13 aus gesteuert. Hierzu enthält das Bedienpaneel vier den Steuerventilen 8 bis 11 zugeordnete Schalter S1 bis S4, gegebenenfalls eine Übersichtsdarstellung 14 über die verschiedenen Schaltmöglichkeiten des Ventils sowie ein Display 15, an dem die vorwählbare Saugstärke, beispielsweise in Prozent, digital angezeigt werden kann.

Die Figur 2 zeigt die Ventilanordnung 6 im Längsschnitt. Zwei Gehäusehälften 16 und 17 bilden im montierten Zustand eine kompakte Ventileinheit. Die untere Gehäusehälfte 17 enthält Anschlußstutzen 17a, 17b, die in geeigneter Weise mit der Saugleitung 12 verbunden sind. In der oberen Gehäusehälfte 16 sind, in sternförmiger Anordnung um ein Zentrum herum das Schaltventil 5 sowie die vier Steuerventile 8 bis 11 versenkt angeordnet. Hierzu enthält das Gehäuse entsprechende Vertiefungen 18 zur Aufnahme der Ventile sowie entsprechende Abdeckungen 19, 20. Während die Abdeckung 19 für das Ventil 5 geschlossen ist und somit das Ventil gegenüber Atmosphäre dicht verschließt, sind die Abdeckungen 20 für die Ventile 8 bis 11 mit einer Entlüftungsbohrung 21 versehen. Das den Durchfluß des Mediums bestimmende Ventil 7 enthält als Verschlußorgan eine Membrane 22, die einerseits einen Ventilraum 23 zwischen Ein- und Auslaßstutzen 17a, 17b und andererseits einen Steuerraum 24 begrenzt. Das Durchflußventil 7 ist hier in einer Schließstellung gezeichnet, in der die Membrane 22 auf einem Ventilsitz 25 aufliegt und so den Ventilraum 23 zwischen Ein- und Auslaß verschließt.

Die Membrane 22 wird durch Druckänderungen im Steuerraum geschaltet. Das Ein- und Ausschalten erfolgt über das Schaltventil 5, welches im aktivierten Zustand über eine Abzweigleitung 26 eine Verbindung des zwischen Unterdruckerzeuger 1 und Ventil 7 befindlichen Leitungsabschnittes der Saugleitung 12 mit dem Steuerraum herstellt. Wie bereits erwähnt, wird das Schaltventil 5 in Abhängigkeit von der Entnahme des Saughandstückes 3 geschaltet, d.h. bei Entnahme des Saughandstückes 3 aus seiner Ablage wird das Ventil 5 aktiviert und die im Ventil integrierte, hier nicht näher bezeichnete Spule vom Strom durchflossen. Dabei wird der Ventilstößel vom Ventilsitz abgehoben und eine direkte Verbindung zwischen der zum Unterdruckerzeuger führenden Saugleitung und dem Steuerraum 24 hergestellt. Durch den im Steuerraum dabei entstehenden Unterdruck wird die Membrane 22, die im nicht aktivierten Zustand des Ventils 5, wie gezeichnet, die Verbindung zwischen Saughandstück und Unterdruckerzeuger verschließt, vom Ventilsitz 25 angehoben.

Um im Steuerraum 24 eine Druckerhöhung zu erzielen und damit die Membrane 22 aus der geöfffneten Stellung in eine Schließstellung zu bringen, sind die Steuerventile 8 bis 11 mit Entlüftungskanälen 27 versehen, welche bei aktiviertem Ventil den Steuerraum 24 über die Entlüftungsbohrungen 21 mit der Atmosphäre verbinden und im nicht aktivierten Zustand diese Verbindung wieder unterbrechen. Des weiteren ist im Zentrum der Gehäusehälfte 16 ein weiterer Entlüftungskanal 28 vorgesehen, der den Steuerraum 24 über die Entlüftungsbohrungen 21 ständig mit der Atmosphäre verbindet.

Den wirksamen Querschnitt in den Entlüftungskanälen 27 der Steuerventile 8 bis 11, des Schaltventils 5 sowie des Entlüftungskanals 28 bestimmen jeweils dort angeordnete Düsen D1 bis D6, wobei den Steuerventilen 8 bis 11 Düsen D1 bis D4 zugeordnet sind. Die Querschnitte der Düsen D1 bis D5 bestimmen in Verbindung mit der Düse D6 das Maß der Druckerhöhung und damit die Stellung der Membrane, wodurch der Durchfluß und damit die Saugstärke individuell eingestellt werden kann. Die wirksamen Entlüftungsquerschnitte der Düsen D1 bis D4 für die Steuerventile 8 bis 11 können nach verschiedenen Kriterien abgestuft sein. So können die Düsen D1 bis D4 für die Ventile 8 bis 11 durch Bohrungen gebildet werden, deren Durchmesser linear oder quadratisch abgestuft sind; ebenso ist es denkbar, die Querschnittsflächen der Düsen D1 bis D4 entsprechend abzustufen.

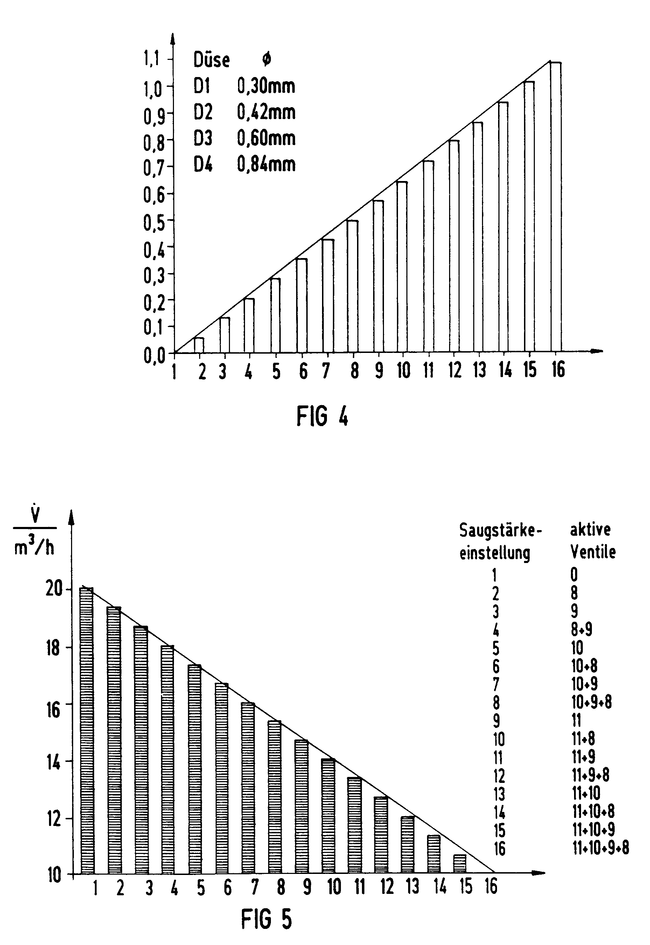

In den Figuren 4 bis 6 sind verschiedene Ventilkennlinien und die damit erzielbaren Wirkungen graphisch dargestellt. Die Figur 4 zeigt eine erste Ventilkennlinie, die die für die Steuerung wirksame Düsenfläche als Funktion der Saugstärkeeinstellung wiedergibt, und zwar bei einer quadratischen Düsenflächenauslegung für die vier Düsen D1 bis D4, wobei die Zuordnung der Düsendurchmesser zu den Düsen D1 bis D4 in der Darstellung angegeben ist. Die Graphik in Figur 5 zeigt den sich bei einer Düsenflächenauslegung nach Figur 4 einzustellenden Volumenstrom als Funktion der Saugstärkeeinstellung, wobei neben der graphischen Darstellung die Zuordnung der einzelnen Saugstärkestufen zu den aktiv geschalteten Ventilen dargestellt ist. Entsprechend den 2ⁿ Schaltmöglichkeiten, die es bei n-Steuerventilen gibt, sind im vorliegenden Anwendungsfalle sechzehn Saugstärke-Einstellungsstufen möglich. Wie aus den Graphiken ersichtlich, ergibt sich für die sechzehn möglichen Saugstärkeeinstellungen eine praktisch lineare Ventilkennlinie und damit annähernd lineare Abstufung des Volumenstromes. Die Saugstärke kann so in sechzehn Stufen von maximaler bis minimaler Durchflußmenge, gegebenenfalls bis auf Null, eingestellt werden. Je nachdem, welche der vier Steuerventile aktiviert sind, ergibt sich eine mehr oder weniger große Belüftungsfläche, wodurch sich im Steuerraum eine entsprechende Druckerhöhung einstellt. Die Membrane 22 öffnet sich dabei so weit, bis sich ein Kräftegleichgewicht zwischen dem Steuerraum und dem Ventilraum einstellt.

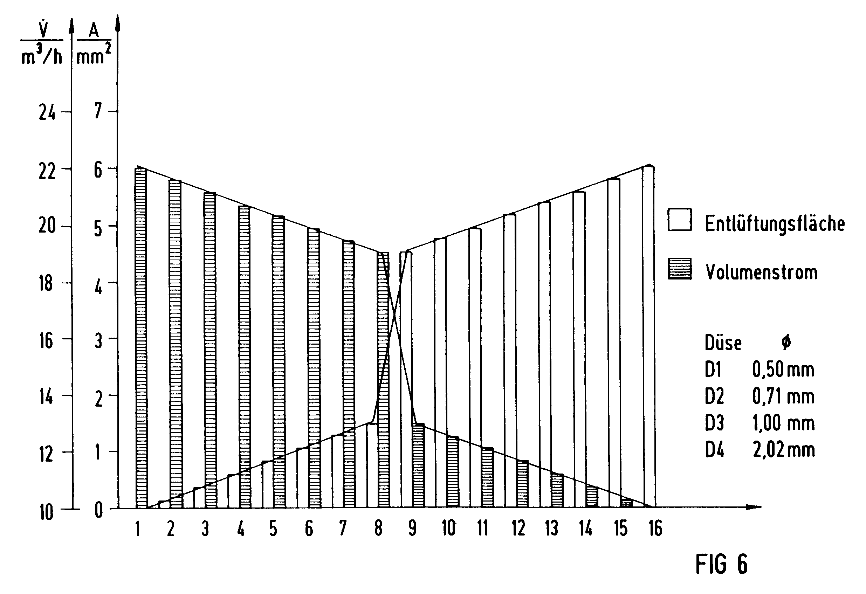

Die Figur 6 zeigt eine Ventilkennlinie mit quadratischer Düsenflächenauslegung für die Düsen D1 bis D3 und einem zweiten Arbeitspunkt durch die Düse D4, wobei in der Graphik einerseits die wirksame Entlüftungsfläche (A/mm²) und andererseits der sich dabei einstellende Volumenstrom (V/m³/h) im Durchflußventil als Funktion der Saugstärkeeinstellung dargestellt ist. Aus der Graphik ist ersichtlich, daß im mittleren Einstellbereich (zwischen Stufe 8 und 9) ein steiler Anstieg in der Vergrößerung der wirksamen Entlüftungsfläche gegeben ist, da hier die Düse D4, welche einen wesentlich größeren Öffnungsquerschnitt hat als die Düsen D1 bis D3, deren wirksame Querschnittsflächen quadratisch abgestuft sind, erstmals aktiviert wird. Im Steuerraum stellt sich so eine relativ starke Druckerhöhung ein, die dazu führt, daß die Membrane 22 entsprechend weit in Richtung Schließstellung verstellt wird. Der Volumenstrom im Durchflußventil kann somit ab der Stufe 9 bewußt stark reduziert werden. Dies ist mit Vorteil zum Beispiel erwünscht, um spontan von großer Saugleistung (z.B. mit Saughandstück) auf kleine Saugleistung (z.B. mit Speichelzieher) umschalten zu können.

Die Steigungen der Ventilkennlinien können durch Änderung des wirksamen Querschnittes an der Düse D6 des Schaltventils 5 beeinflußt werden, wodurch der Anfangsvolumenstrom bei nicht aktivierten Steuerventilen (Saugstärkestellung 1) den Erfordernissen angepaßt werden kann.

Anstelle der Zwangsbelüftung über den Entlüftungskanal 28 kann auch eine Belüftung im Schaltventil 5 vorgesehen sein, in dem der Ventilsitz dieses Ventils so gestaltet ist, daß der Stößel, der einen ersten Ventilsitz öffnet (in Fig. 2 die Öffnung der Düse D6), im geöffneten Zustand einen zweiten Ventilsitz, der eine Verbindung mit der Atmosphäre hat, verschließt, und umgekehrt. Diese Bauform hat den Vorteil, daß keine Strömungsverluste auftreten und daß eine zum Ausgleich des Druckverlustes im Anschlußstutzen 17b vorgesehene Drosselstelle 29 entbehrlich wird.

Obgleich die vorgestellte Konstruktion der erfindungsgemäßen Ventilanordnung besonders vorteilhaft ist, insbesondere eine sehr kompakte Bauweise zuläßt, sind im Rahmen der Erfindung auch andere Bauformen möglich. So kann anstelle der Membrane auch ein Stößelventilkörper vorgesehen sein, der über entsprechende pneumatische oder, wie im vorgesehenen Fall, elektromagnetische Ventile gesteuert wird. Auch die Anordnung mechanisch gesteuerter Steuerventile ist grundsätzlich möglich.

Die Ansteuerung der vier Steuerventile 8 bis 11 kann anstelle mittels der vier Schalter S1 bis S4 auch mittels eines einzigen Plus/Minus-Schalters in Verbindung mit einer entsprechenden Steuerelektronik erfolgen, wobei die einzelnen anwählbaren Saugstärkeeinstellungen am Display 15 dann vorteilhafterweise gleich in % des maximalen Volumenstromes angezeigt werden können.

## Patentansprüche

1. Ventilanordnung zur Steuerung des Durchflusses eines Luftstromes in einer Luftströmungsanlage, vorzugsweise zur Steuerung des Saugstromes in einer zahnärztlichen Absauganlage, mit einem den Durchfluß bestimmenden Ventil (7) welches ein Verschlußorgan (22) enthält, das einerseits einen Ventilraum (23) und andererseits einen Steuerraum (24) begrenzt und das durch Druckänderungen im Steuerraum von einer Stellung bei gleichen Drücken in Ventil- und Steuerraum in eine Schließstellung bei höherem Druck im Steuerraum bringbar ist, **dadurch gekennzeichnet,** daß zur Erzielung einer Druckerhöhung im Steuerraum (24) eine Vielzahl (n-) von Steuerventilen (8 bis 11) vorgesehen ist, über die dem Steuerraum (24) Luft mit höherem Druck als im Ventilraum (23) zuführbar ist, wobei die wirksamen Leitungsquerschnitte (D1 bis D4), über die dem Steuerraum mittels der Steuerventile der höhere Druck zuführbar ist, so bemessen sind, daß jedes Steuerventil (8 bis 11) für sich nur eine partielle Schließung des Verschlußorgans (22) bewirkt, und daß die Steuerventile wahlweise einzeln, in Gruppen oder gemeinsam aktivierbar sind.

2. Ventilanordnung nach Anspruch 1, **dadurch gekennzeichnet,** daß die den Steuerventilen (8 bis 11) zugeordneten wirksamen Leitungsquerschnitte (D1 bis D4) unterschiedlich groß sind.

3. Ventilanordnung nach Anspruch 2, **dadurch gekennzeichnet,** daß die Leitungsquerschnitte (D1 bis D4) durch Öffnungen gebildet sind, deren Flächen quadratisch abgestuft sind.

4. Ventilanordnung nach Anspruch 2, **dadurch gekennzeichnet,** daß die Leitungsquerschnitte (D1 bis D3) von (n -1) Ventilen durch Öfnungen gebildet sind, deren Flächen quadratisch abgestuft sind, und der Leitungsquerschnitt eines weiteren Ventils (D4) einen demgegenüber wesentlich größeren Öffnungsquerschnitt aufweist, wodurch ein zweiter Arbeitspunkt gebildet wird.

5. Ventilanordnung nach einem der Ansprüche 1 bis 4, **dadurch gekennzeichnet,** daß zur Erzielung des Druckausgleichs zwischen Ventilraum (23) und Steuerraum (24) ein Schaltventil (5) vorgesehen ist, welches bei Aktivierung den Steuerraum (24) mit dem Ventilraum (23) über eine Abzweigleitung (26) verbindet.

6. Ventilanordnung nach Anspruch 5, **dadurch gekennzeichnet,** daß Steuerventile (8 bis 11) und Schaltventil (5) in einem Gehäuseabschnitt (16) des Durchflußventils (7) angeordnet sind.

7. Ventilanordnung nach Anspruch 6, **dadurch gekennzeichnet,** daß die Ventile (8 bis 11) sternförmig um einen Zentrumspunkt herum in Vertiefungen (18) des Gehäuseabschnites (16) angeordnet sind.

8. Ventilanordnung nach Anspruch 7, **dadurch gekennzeichnet,** daß die Steuerventile (8 bis 11) und das Schaltventil (5) Elektro-Magnetventile sind, welche über ein extern des Durchflußventils (7) angeordnetes Steuerpaneel (13) aktivierbar sind.

9. Ventilanordnung nach Anspruch 8, **dadurch gekennzeichnet,** daß die Stößel der Magnetventile im Spulenkörper so angeordnet sind, daß sie den Zufuhrkanal bei geöffnetem Durchflußventil verschließen und bei geschlossenem Ventil offen lassen.

10. Ventilanordnung nach eiem Anspruch 1 bis 9, bei welcher zur Steuerung des Saugstromes im geschalteten Zustand im Ventilraum (23) Unterdruck herrscht und bei welcher die Druckerhöhung im Steuerraum (24) durch Atmosphärendruck erzielbar ist, **dadurch gekennzeichnet,** daß eine ständig mit der Atmosphäre in Verbindung stehender Entlüftungskanal (28) vorgesehen ist, dessen wirksamer Querschnitt (D 5) so bemessen ist daß der über ihn erzielbare Druckausgleich bei nicht aktivierten Steuerventilen (8 bis 11) zu keiner nennenswerten Schließung des Verschlußorganes (22) führt.

## Claims

1. Valve arrangement for controlling the flow of an air stream in an air-flow system, preferably for controlling the suction stream in a dental suction system, having a valve (7) determining the flow, which valve contains a closing part (22) which limits on one side a valve area (23) and on the other side a control area (24) and which by means of pressure changes in the control area can be brought from a position with equal pressures in the valve area and control area into a closed position with higher pressure in the control area, characterized in that to attain a pressure increase in the control area (24) a plurality (n-) of control valves (8 to 11) is provided, by way of which air with a greater pressure than in the valve area (23) can be supplied to the control area (24), with the effective line cross sections (D1 to D4), by way of which the higher pressure can be supplied to the control area by means of the control valves, being dimensioned such that each control valve (8 to 11) in itself only effects a partial closing of the closing part (22), and in that the control valves can be activated selectively individually, in groups or together.

2. Valve arrangement according to claim 1, characterized in that the effective line cross sections (D1 to D4) associated with the control valves (8 to 11) are of differing sizes.

3. Valve arrangement according to claim 2, characterized in that the line cross sections (D1 to D4) are formed by openings, the faces of which are stepped in a square manner.

4. Valve arrangement according to claim 2, characterized in that the line cross sections (D1 to D3) of (n -1) valves are formed by openings, the faces of which are stepped in a square manner, and the line cross section of a further valve (D4) has in contrast a substantially larger opening cross section, whereby a second working point is formed.

5. Valve arrangement according to one of claims 1 to 4, characterized in that to attain the pressure compensation between the valve area (23) and the control area (24) a switching valve (5) is provided, which upon activation connects the control area (24) to the valve area (23) by way of a branch line (26).

6. Valve arrangement according to claim 5, characterized in that the control valves (8 to 11) and the switching valve (5) are arranged in a housing section (16) of the flow valve (7).

7. Valve arrangement according to claim 6, characterized in that the valves (8 to 11) are arranged in a star-shaped manner about a centre point in depressions (18) of the housing section (16).

8. Valve arrangement according to claim 7, characterized in that the control valves (8 to 11) and the switching valve (5) are electromagnetic valves which can be activated by way of a control panel (13) arranged outside the flow valve (7).

9. Valve arrangement according to claim 8, characterized in that the push rods of the magnetic valves in the coil body are arranged in such a way that they close the supply channel when the flow valve is open and leave it open when the valve is closed.

10. Valve arrangement according to one of claims 1 to 9, where to control the suction stream in the connected state a low pressure prevails in the valve area (23) and where the pressure increase in the control area (24) can be attained by way of atmospheric pressure, characterized in that a ventilation channel (28) constantly connected to the atmosphere is provided, the effective cross section (D 5) of which is dimensioned such that the pressure compensation attainable by way of it does not lead to any considerable closing of the closing part (22) when the control valves (8 to 11) are not activated.

## Revendications

1. Dispositif à soupapes pour commander le débit d'air dans une installation aéraulique, de préférence pour commander l'aspiration dans une installation d'aspiration de dentiste, possédant une soupape (7) de commande de débit qui comporte un obturateur (22), lequel délimite d'une part une chambre (23) de soupape et, d'autre part, une chambre (24) de commande, et peut être déplacé par variation de la pression dans la chambre de commande d'une position où les pressions sont identiques dans les chambres de soupape et de commande à une position de fermeture où la pression est supérieure dans la chambre de commande, caractérisé par le fait que, pour obtenir un accroissement de la pression dans la chambre (24) de commande, une multiplicité (n-) de soupapes (8 à 11) de commande est prévue, par l'intermédiaire desquelles on peut envoyer dans la chambre (24) de commande de l'air à une pression plus élevée que dans la chambre (23) de soupape, les sections transversales (D1 à D4) efficaces des conduits par l'intermédiaire desquelles on peut transmettre la pression plus élevée dans la chambre de commande au moyen des soupapes de commande, étant dimensionnées de façon telle que chaque soupape (8 à 11) de commande prise séparément ne provoque qu'une fermeture partielle de l'obturateur (22) et que les soupapes de commande puissent être actionnées, au choix, seules, par groupes ou conjointement.

2. Dispositif à soupapes selon la revendication 1, caractérisé par le fait que les sections transversales (D1 à D4) efficaces des conduits associées aux soupapes (8 à 11) de commande sont de tailles différentes.

3. Dispositif à soupapes selon la revendication 2, caractérisé par le fait que les sections transversales (D1 à D4) des conduits sont constituées par des orifices dont les surfaces sont échelonnées de façon quadratique.

4. Dispositif à soupapes selon la revendication 2, caractérisé par le fait que les sections transversales (D1 à D3) des conduits de (n-1) soupapes sont constituées par des orifices dont les surfaces sont échelonnées de façon quadratique et que, par contre, la section transversale d'une autre soupape (D4) présente une section d'orifice beaucoup plus grande, grâce à quoi un second point de fonctionnement est constitué.

5. Dispositif à soupapes selon l'une des revendications 1 à 4, caractérisé par le fait que, pour obtenir un équilibre de pression entre la chambre (23) de soupape et la chambre (24) de commande, il est prévu une soupape (5) de commutation qui, lorsqu'elle est actionnée, met la chambre de commande (24) en commnication avec la chambre (23) de soupape par l'intermédiaire d'un conduit (26) de dérivation.

6. Dispositif à soupapes selon la revendication 5, caractérisé par le fait que les soupapes (8 à 11) de commande et la soupape (5) de commutation sont placées dans une partie (16) du boîtier de la soupape (7) de commande de débit.

7. Dispositif à soupapes selon la revendication 6, caractérisé par le fait que les soupapes (8 à 11) sont placées en étoile autour d'un point central dans des évidements (18) de la partie (16) de boîtier.

8. Dispositif à soupapes selon la revendication 7, caractérisé par le fait que les soupapes (8 à 11) de commande et la soupape (5) de commutation sont des électrovannes que l'on peut actionner par l'intermédiaire d'un panneau (13) de commande extérieure à la soupape (7) de commande de débit.

9. Dispositif à soupapes selon la revendication 8, caractérisé par le fait que les taquets des électrovannes sont disposés dans des armatures de bobine de champ de façon telle que, lorsque la soupape de commande de débit est ouverte, ils obturent le canal d'amenée et, lorsque la soupape est fermée, ils le laissent ouvert.

10. Dispositif à soupapes selon l'une des revendications 1 à 9, dans lequel, en fonctionnement, il règne une dépression dans la chambre (23) de soupape pour commander le courant d'aspiration et dans lequel on peut obtenir l'élévation de la pression dans la chambre (24) de commande par la pression atmosphérique, caractérisé par le fait il est prévu un canal (28) de mise à l'atmosphère, qui est, constamment en communication avec l'atmosphère et dont la section transversale (D 5) efficace a des dimensions telles que l'équilibre de pression que l'on peut obtenir par son intermédiaire ne provoque pas une fermeture notable de l'obturateur (22) lorsque les soupapes (8 à 11) de commande ne sont pas actionnées.
